# EUROPEAN PATENT APPLICATION

(11) **EP 3 403 748 A1**
(43) Date of publication of application: **21.11.2018**
(21) Application number: 18167754.3
(22) Date of filing: 17.04.2018
(51) Int. Cl.: B22F 3/12, B22F 3/15, B22F 3/24, B33Y 40/00

(54) **HEAT TREATMENT METHOD**

(30) Priority: 17.05.2017 GB 201707895
(71) Applicant: Rolls-Royce plc, London SW1E 6AT (GB)
(72) Inventor: Pardhi, Yogiraj, Derby, Derbyshire DE24 8BJ (GB)
(74) Representative: Rolls-Royce plc

(57) **Abstract**

The present disclosure relates to a method of heat treating a component (e.g. a combustor tile) which may be formed of a first material e.g. a nickel superalloy. The component may be formed using an ALM method. The method comprises enclosing at least part of the component in a foil envelope which may be formed of a second material wherein the second material (e.g. stainless steel) is more susceptible to reactive oxidation than the first material. Next the envelope is purged with an inert gas (e.g. argon) and the envelope is sealed. The component is then heated e.g. using hot isostatic pressing.

## Description

The present disclosure relates to a method of heat treating a component e.g. a component formed from additive layer manufacturing.

### Background

In the aerospace industry, components such as combustor and turbine components manufactured by additive layer manufacturing (ALM) methods can have significant performance and weight advantages over components manufactured by more traditional methods.

Powder bed ALM methods construct components layer by layer by depositing powder on a machine bed or base/build plate and then selectively consolidating or fusing the powder using an energy beam such as a laser or an electron beam. The powder deposition/consolidation steps are repeated to produce a three dimensional component.

The resulting component often comprises defects such as cracks, porosity and layering defects. Such defects can be effectively reduced using hot isostatic pressing or other heat treatments.

Hot isostatic pressing (HIP) is a heat treatment in which high (up to 200 MPa) isostatic pressure is applied to a component e.g. a component formed by an additive layer manufacturing (ALM) method, contained within an inert (e.g. argon) atmosphere in a sealed canister at a high temperature.

It has been found that when the ALM component is formed of certain alloys e.g. high gamma prime (y') nickel superalloys, the HIP or other heat treatment can result in unacceptable levels of cracking. It is believed that this cracking is the result of low amounts of oxygen present in the argon (or other inert gas) causing stress assisted oxidation at highly stressed locations on the component. This is a particular concern in HIP processes where pressures up to 200 MPa are used and the effective oxygen available is high. The stresses in ALM components resulting from the rapid cooling rates during ALM method are high, in some cases approaching yield strength of the material. To realize the full benefits of ALM, the components often have highly complex geometry. In addition to high cooling rates, this results in highly stressed locations. Under the influence of high residual stress and applied temperature the residual oxygen can diffuse into the component to form a brittle oxide which is then susceptible to cracking.

Attempts to eliminate the low amounts of residual oxygen (either in the inert gas or in the canister/heat treatment vessel) have proved very costly and therefore commercially unviable.

Prior art methods such as that disclosed in US2014/0034626 have added attempted to introduce a compressive residual stress in the component part but this involves an additional process step and is unsuitable for thin walled components where the method of introducing compressive stress (e.g. peening, shot blasting) could lead to undesirable distortion.

Accordingly the present disclosure seeks to provide a method of heat treatment that reduces oxide formation and the associated cracking in components, e.g. in components manufactured using an ALM method from a powder material e.g. a high gamma prime nickel super alloy powder.

### Summary

In a first aspect, there is provided a method of heat treating a component, the method comprising:
enclosing at least part of the component in a foil envelope;
purging the envelope with an inert gas;
sealing the envelope; and
heating the component.

By sealing at least part of the component (e.g. a part having high residual stress) within a foil envelope containing an inert gas, it is possible to reduce stress assisted oxidation and thus reduce cracking in the component. This, in turn, reduces component scrap rate. The method does not require a further complex component processing step and allows increased design freedom as geometries which induce highly stressed locations need not be avoided provided that they are wrapped and sealed within the foil envelope. Furthermore, the method is economically viable since foil for forming the envelope may be obtained easily and cheaply from commercially available sources.

The foil envelope encloses the component/component part within a reduced volume (compared to the heat treatment vessel) which can be more effectively purged with inert gas thus reducing the exposure of the highly stressed location to residual oxygen contained within the heat treatment vessel.

Optional features will now be set out. These are applicable singly or in any combination with any aspect of the disclosure.

In some embodiments, the component is a combustor tile and the method comprises:
enclosing at least part of the combustor tile in a foil envelope;
purging the envelope with an inert gas;
sealing the envelope; and
heating the combustor tile.

Accordingly, the present disclosure provides a method of manufacture of a combustor tile for a gas turbine engine, the method comprising a heat treating step as described herein.

In some embodiments, the component/combustor tile is formed of a first material and the foil envelope is formed of a second material, the second material being more susceptible to reactive oxidation than the first material.

When the second material (forming the foil envelope) is more susceptible to oxidation than the first material (forming the component), any oxygen remaining in the heat treatment vessel (or contained within the inert gas), preferentially oxidizes the envelope foil rather than the first material forming the component. In effect, in this embodiment, the foil envelope acts not only as a barrier but is also sacrificed to improve the purity of the inert gas surrounding the envelope and which may gain access to the component/combustor tile.

In some embodiments, the method further comprises manufacturing the component/combustor tile using an ALM method prior to enclosing at least part of the component/combustor tile in the foil envelope.

In some embodiments, the method comprises forming the component/combustor tile of a nickel superalloy e.g. a high gamma prime nickel superalloy (e.g. by an ALM method) prior to enclosing at least part of the component/combustor tile in the foil envelope. Suitable examples include CM247, RR1000, CMSX486, CMSX4 and their variants.

In some embodiments, the method further comprises grit blasting, surface finished or peening the surface of the component/combustor tile prior to enclosing it in the foil envelope.

This removes surface irregularities and may further assist in crack reductions during heat treatment.

In some embodiments, the second material for forming the foil envelope comprises an alloy having iron, aluminium, titanium, zirconium, or hafnium as a major component. For example, the second material may be stainless steel. For example, the foil may be commercially available 321 stainless steel foil, 309 stainless steel or 304 stainless steel. The foil may have a thickness of around 0.05 mm.

In some embodiments, method comprises enclosing at least part of the component/combustor tile in a multilayer foil envelope e.g. the envelope may be formed by a double, triple etc. layer of the second material.

In some embodiments, the method comprises forming a spacing structure surrounding the component/component part (e.g. combustor tile) prior to enclosing it in the foil envelope. In this way, the foil envelope can abut the spacing structure, the spacing structure spacing the foil envelope from the component/component part (so that the foil envelope does not touch the component/component part/combustor tile).

The spacing structure may be one or more struts. The spacing structure may be a cage or mesh structure.

In some embodiments the spacing structure is adapted to space the foil envelope from the component/component part/combustor tile by a minimum finite amount such that the foil envelope is in close proximity but spaced from the component/component part/combustor tile.

In some embodiments, the method comprises purging the foil envelope with an inert gas comprising argon.

The method may comprise enclosing the component/component part/combustor tile within the foil envelope whilst providing an inert gas inlet opening and an inert gas outlet opening, with an inert gas flow path extending therebetween (through the foil envelope). The inert gas will enter through the inlet opening and flow through the foil envelope to the outlet opening, purging the foil envelope of air as it passes through the foil envelope. Where the inert gas is heavier than air (e.g. when the inert gas is argon), the outlet opening may be provided at the lowest vertical position in the foil envelope (e.g. at a lowermost edge) to assist flow of the inert gas through the entire foil envelope. The inlet opening may be provided at the highest vertical position (e.g. at an uppermost edge) in the foil envelope.

After purging the foil envelope with inert gas, the inlet and outlet openings are sealed. In some embodiments, the outlet opening is sealed prior to the inlet opening.

In some embodiments, the method comprises providing one or more vents in the envelope. The vent(s), which may comprise a perforation or aperture in the foil envelope may be provided at the uppermost edge (if the inert gas used is heavier than air) or at the lowermost edge (if the inert gas used is lighter than air).

After sealing of the foil envelope (with or without providing one or more vent(s)), the component may be placed within a heat treatment vessel.

In some embodiments, the heat treatment vessel is purged with an inert gas e.g. argon.

In some embodiments, the method comprises heating the component/combustor tile using increased pressure i.e. at a pressure greater than atmospheric pressure. In some embodiments, the method comprises heating the component using hot isostatic pressing.

After heat treatment, some embodiments further comprise component finishing operations and/or removal of support structures e.g. support structures formed during ALM methods (although these support structures may be removed prior to the wrapping of the component in the foil envelope.)

The skilled person will appreciate that except where mutually exclusive, a feature described in relation to any one of the above aspects may be applied mutatis mutandis to any other aspect. Furthermore except where mutually exclusive any feature described herein may be applied to any aspect and/or combined with any other feature described herein.

### Brief Description of the Drawings

Embodiments will now be described by way of example with reference to the accompanying drawings in which:

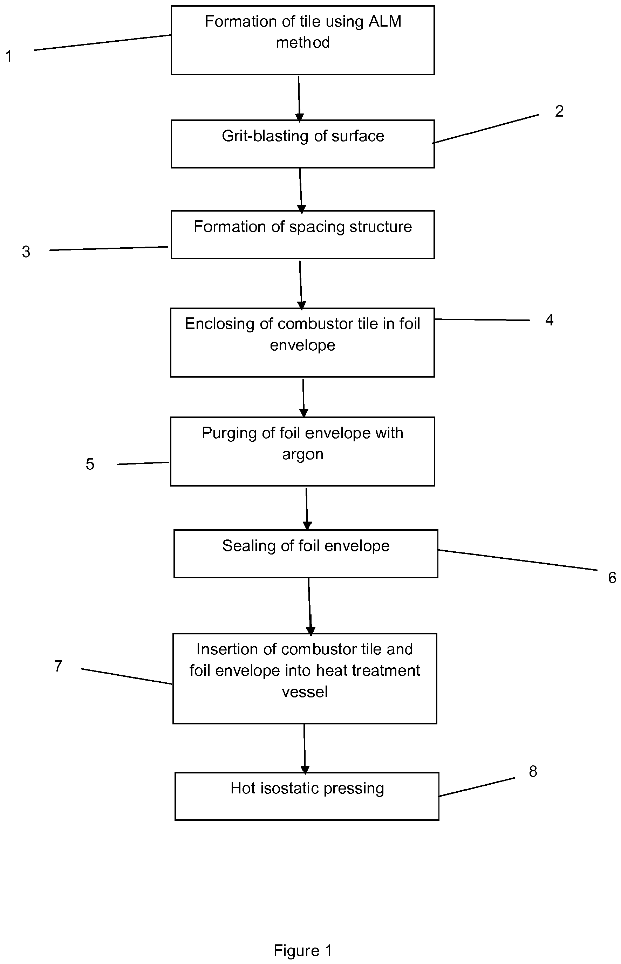

Figure 1 shows a schematic representation of a first embodiment of the first aspect; and
Figure 2 is a sectional view of a gas turbine engine.

### Detailed Description and Further Optional Features

In step 1, a combustor tile is formed of a high gamma prime nickel superalloy CM247LC using an additive layer manufacturing method.

In step 2, the surface of the combustor file is grit-blasted to remove any surface irregularities.

In step 3, a spacing structure is formed to surround the combustor tile. The spacing structure comprises a plurality of struts which project from the combustor tile.

In step 4, the combustor tile is enclosed in a foil envelope formed of 0.05mm thick 321 stainless steel foil. The foil is wrapped around the spacing structure such that the plurality of struts maintains a small spacing between the foil envelope and the combustor tile i.e. so that the foil envelope does not touch the combustor tile at any point. The foil envelope has an inlet opening at an uppermost edge and an outlet opening at a lowermost edge.

In step 5, the foil envelope is purged with argon by flowing argon into the inlet opening such that it passes through the foil envelope and out of the outlet opening. The argon purges the foil envelope of atmospheric air.

In step 6, the outlet opening is sealed followed by sealing of the inlet opening. A series of small perforations are provided at the uppermost edge of the foil envelope to allow for venting of the foil envelope under pressure.

In step 7, the combustor tile and foil envelope are placed within a heat treatment vessel and the heat treatment vessel is purged with argon.

Finally, in step 8, the combustor tile is subjected to hot isostatic pressing.

The resulting combustor tile has been found to have a reduced susceptibility to cracking, even at locations which are highly stressed owing to their geometry.

The foil envelope encloses the combustor tile within a reduced volume (compared to the heat treatment vessel) which can be more effectively purged with inert gas thus reducing the exposure of the highly stressed location to residual oxygen contained within the heat treatment vessel. Furthermore, the foil envelope is also sacrificed to improve the purity of the inert gas surrounding the envelope and which may gain access to the combustor tile e.g. through the venting perforations.

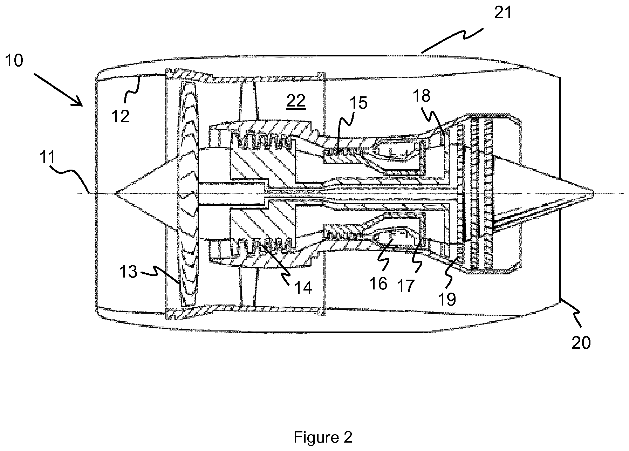

With reference to Figure 2, a gas turbine engine is generally indicated at 10, having a principal and rotational axis 11. The engine 10 comprises, in axial flow series, an air intake 12, a propulsive fan 13, an intermediate pressure compressor 14, a high-pressure compressor 15, combustion equipment 16 comprising a plurality of combustor tiles manufactured as described above, a high-pressure turbine 17, an intermediate pressure turbine 18, a low-pressure turbine 19 and an exhaust nozzle 20. A nacelle 21 generally surrounds the engine 10 and defines both the intake 12 and the exhaust nozzle 20.

The gas turbine engine 10 works in the conventional manner so that air entering the intake 12 is accelerated by the fan 13 to produce two air flows: a first air flow into the intermediate pressure compressor 14 and a second air flow which passes through a bypass duct 22 to provide propulsive thrust. The intermediate pressure compressor 14 compresses the air flow directed into it before delivering that air to the high pressure compressor 15 where further compression takes place.

The compressed air exhausted from the high-pressure compressor 15 is directed into the combustion equipment 16 where it is mixed with fuel and the mixture combusted. The combustion equipment 16 typically comprises an annular combustion chamber which is lined with the plurality of combustor tiles which can be manufactured according to the method described herein.

The resultant hot combustion products generated within the combustion equipment 16 then expand through, and thereby drive the high, intermediate and low-pressure turbines 17, 18, 19 before being exhausted through the nozzle 20 to provide additional propulsive thrust. The high 17, intermediate 18 and low 19 pressure turbines drive respectively the high pressure compressor 15, intermediate pressure compressor 14 and fan 13, each by suitable interconnecting shaft.

Other gas turbine engines to which the present disclosure may be applied may have alternative configurations. By way of example such engines may have an alternative number of interconnecting shafts (e.g. two) and/or an alternative number of compressors and/or turbines. Further the engine may comprise a gearbox provided in the drive train from a turbine to a compressor and/or fan.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A method of heat treating a component, the method comprising:
enclosing (4) at least part of the component in a foil envelope;
purging (5) the envelope with an inert gas;
sealing (6) the envelope; and
heating the component.

2. A method according to claim 1 further comprising manufacturing (1) the component using an ALM method prior to enclosing at least part of the component in the foil envelope.

3. A method according to claim 2 comprising manufacturing the component from a nickel superalloy using an ALM method.

4. A method according to claim 3 comprising manufacturing the component from a high gamma prime nickel superalloy using an ALM method.

5. A method according to any one of claims 1 to 4 wherein the method further comprises grit blasting (2), surface finished or peening the surface of the component prior to enclosing it in the foil envelope.

6. A method according to any one of the preceding claims wherein the component is formed of a first material and the foil envelope if formed of a second material which is more susceptible to reactive oxidation than the first material.

7. A method according to claim 6 wherein the second material comprises an alloy having iron, aluminium, titanium, zirconium, or hafnium as a major component.

8. A method according to claim 7 wherein the second material for forming the foil envelope is stainless steel.

9. A method according to any one of the preceding claims comprising forming (3) a spacing structure surrounding the component/component part prior to enclosing it in the foil envelope.

10. A method according to any one of the preceding claims comprising purging the foil envelope with an inert gas comprising argon.

11. A method according to any one of the preceding claims comprising enclosing the component/component part within the foil envelope whilst providing an inert gas inlet opening at an uppermost edge of the foil envelope and an inert gas outlet opening at a lowermost edge of the foil envelope with an inert gas flow path extending therebetween.

12. A method according to any one of the preceding claims wherein the component is heated under increased pressure.

13. A method according to claim 12 comprising heating (8) the component using hot isostatic pressing.

14. A method according to any one of the preceding claims comprising providing one or more vents in the envelope during or after sealing of the envelope.

15. A method according to any one of the preceding claims wherein the component is a combustor tile for a gas turbine engine.
